# EUROPEAN PATENT APPLICATION

(11) **EP 2 813 934 A1**
(43) Date of publication of application: **17.12.2014**
(21) Application number: 14171865.0
(22) Date of filing: 11.06.2014
(51) Int. Cl.: G06F 3/0484, G06F 15/02, G06F 1/16

(54) **Electronic apparatus and graph display method**

(30) Priority: 11.06.2013 JP 2013122774
(71) Applicant: Casio Computer Co., Ltd., Tokyo 151-8543 (JP)
(72) Inventor: Karoji, Kosuke, Hamura-shi, Tokyo 205-855 (JP)
(74) Representative: Grünecker, Kinkeldey, Stockmair & Schwanhäusser

(57) **Abstract**

An electronic apparatus includes: a display device; and a processor configured to: display a graph corresponding to a function formula on the display device, wherein a coefficient of a term included in the function formula comprises a variable; determine a numeric value range of numeric values which are to be inputted to the variable, based on a degree of the term and a display state of the graph; generate an operation receiver for allowing a user to variably specify a numeric value within the determined numeric value range; display the operation receiver on the display device. When a numeric value is specified within the numeric value range through the operation receiver, the processor displays a graph corresponding to a function formula in which the specified numeric value is inputted to the variable on the display device.

## Description

### BACKGROUND

### 1. Technical Field

The present invention relates to an electronic apparatus having a graph display function for displaying a graph corresponding to a function formula and a graph display method.

### 2. Description of the Related Art

In the background art, when a user inputs a function formula y = f(x) in a scientific electronic calculator (graph scientific electronic calculator) having a graph display function, a graph corresponding to the inputted function formula is displayed on a display of the scientific electronic calculator.

Here, the user may want to see the change of the shape of the graph when a coefficient of a term in the function formula is varied. In such a case, the graph scientific electronic calculator is conceived as follows. That is, when the user inputs, for example, a formula of a quadratic function y = AX² + X + 1 in the graph scientific electronic calculator, a special screen for setting values of a coefficient A of the formula y = AX² + X + 1 is displayed to allow the user to input a start value (Start), an end value (End) and a pitch (Pitch) of the coefficient A on the special screen. When the values of the coefficient A which vary are set thus, graphs of the function formula in accordance with the values of the coefficient A are displayed successively on a display of the graph scientific electronic calculator (for example, see JP-A-09-282475).

In order to display the graphs in which the values of the coefficient included in the function formula are varied in the related-art graph scientific electronic calculator, the special screen for setting the values of the coefficient needs to be displayed once and an operation for setting the respective values needs to be performed. For this sake, a troublesome operation is necessary.

In addition, whenever the values and the pitch of the coefficient which have been set once are to be changed on the special screen, the screen needs to be displayed again and the values and the pitch of the coefficient need to be set again. For this sake, there is a problem that it takes much time and labor.

### SUMMARY

One of illustrative aspects of the present invention is to provide an electronic apparatus and a graph display method in which a value of a coefficient can be varied easily when the coefficient included in a function formula is set as a variable.

According to one or more aspects of the present invention, an electronic apparatus includes: a display device; and a processor configured to: display a graph corresponding to a function formula on the display device, wherein a coefficient of a term included in the function formula comprises a variable; determine a numeric value range of numeric values which are to be inputted to the variable, based on a degree of the term and a display state of the graph; generate an operation receiver for allowing a user to variably specify a numeric value within the determined numeric value range; display the operation receiver on the display device. When a numeric value is specified within the numeric value range through the operation receiver, the processor displays a graph corresponding to a function formula in which the specified numeric value is inputted to the variable on the display device.

According to the invention, an operation receiver called slider for receiving a value of a coefficient included in a function formula can be displayed so that a user can display a graph corresponding to the function formula while varying the coefficient easily.

### BRIEF DESCRIPTION OF DRAWINGS

Fig. 1 is a front view of the external appearance of a graph scientific electronic calculator 10 as an embodiment of an electronic apparatus according to the invention;
Fig. 2 is a block diagram showing the circuit configuration of the graph scientific electronic calculator 10;
Fig. 3 is a view showing the contents of table data stored in a slider pattern table 15f of the graph scientific electronic calculator 10;
Fig. 4 is a flow chart showing a graph display process of the graph scientific electronic calculator 10;
Fig. 5 is a flow chart showing a slider generation process of the graph scientific electronic calculator 10;
Fig. 6 is a flow chart showing a slider operation process of the graph scientific electronic calculator 10;
Fig. 7 is a view showing an operation to change a slider of the graph scientific electronic calculator 10; and
Fig. 8 is a view showing the change of the display of a graph y in response to the slider operation.

### DETAILED DESCRIPTION OF EXEMPLARY EMBODIMENTS

An embodiment of the invention will be described below with reference to the drawings.

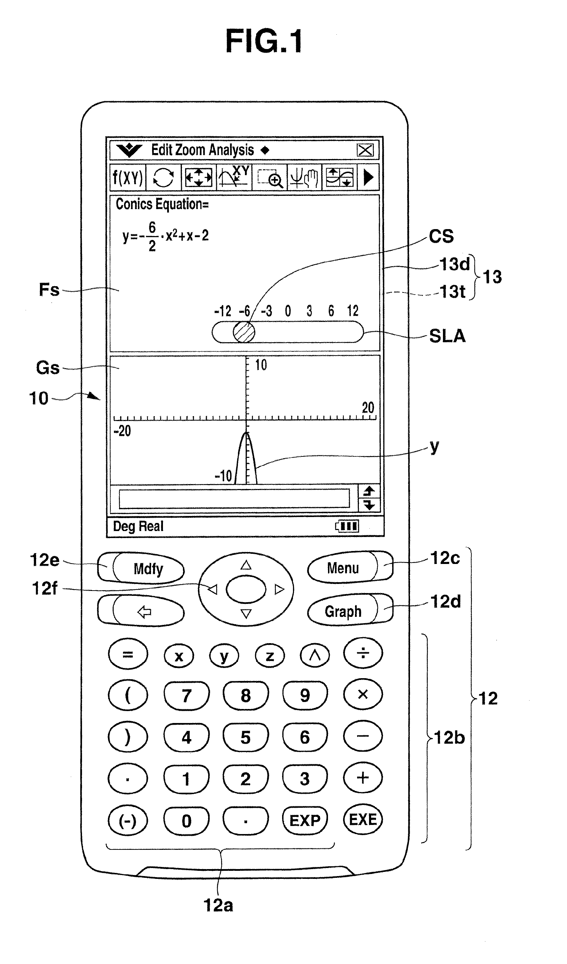

Fig. 1 is a front view of the external appearance of a graph scientific electronic calculator 10 as an embodiment of an electronic apparatus according to the invention.

This electronic apparatus may be applied to a special graph scientific electronic calculator 10 which will be described below or may be applied to a tablet terminal, a cellular phone, a portable game machine, etc. provided with a display which can display a graph.

The graph scientific electronic calculator 10 has a function of displaying an inputted function formula and a graph corresponding to the function formula.

A key input portion 12 and a touch panel display 13 are provided in a body of the graph scientific electronic calculator 10 so that the key input portion 12 covers about an area of a lower half part of the front surface of the body while the touch panel display 13 covers about an area of an upper half part of the same.

The key input portion 12 is provided with numeric and symbol keys 12a, function and operator keys 12b, a [Menu] key 12c, a [Graph] key 12d, a [Mdfy] key 12e, cursor keys 12f, etc.

The numeric and symbol keys 12a are constituted by a numeric and symbol inputting key group in which various keys such as numeric keys and symbol keys are arrayed.

The function and operator keys 12b are constituted by various functional symbol keys and operator keys such as [+], [-], [×], [÷] and [=] which are operated for inputting a mathematical formula or a function formula.

The [Menu] key 12c is operated for displaying a selection menu of various operation modes such as an arithmetic operation mode for inputting a calculation formula and performing arithmetic processing thereon, a graph mode for drawing a graph of an inputted function formula, and a program mode for installing a desired program and making the program perform calculation processing.

The [Graph] key 12d is operated for drawing a graph based on inputted data.

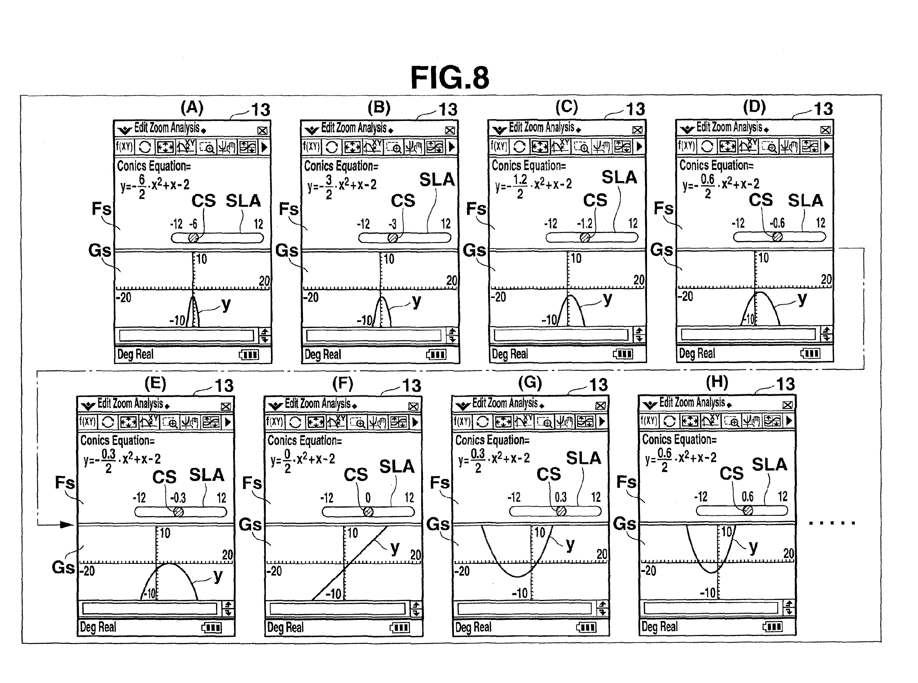

The [Mdfy(Modify)] key 12e is a key for displaying a slider (operation receiver) SL for varying a value of a coefficient when a graph corresponding to a function formula y = f(x) is displayed in the graph mode. The slider SL is constituted by a long-shaped display body indicating a variable range of numeric values and a knob portion CS provided slidably on the display body. In the slider SL, a numeric value corresponding to the position of the knob portion CS can be specified as a coefficient (see Fig. 1 and Figs. 8(A) to 8(H)).

Incidentally, inputting of the [Graph] key 12d and the [Mdfy] key 12e may be performed by means of icons displayed on the touch panel display 13.

The cursor keys ([↑], [↓], [←] and [→]) 12f are operated respectively for performing an operation for selecting and sending displayed data, an operation for moving the cursor, etc.

In addition, the touch panel display 13 is constituted by a transparent touch panel 13t pasted on a liquid crystal display screen 13d which can perform color display.

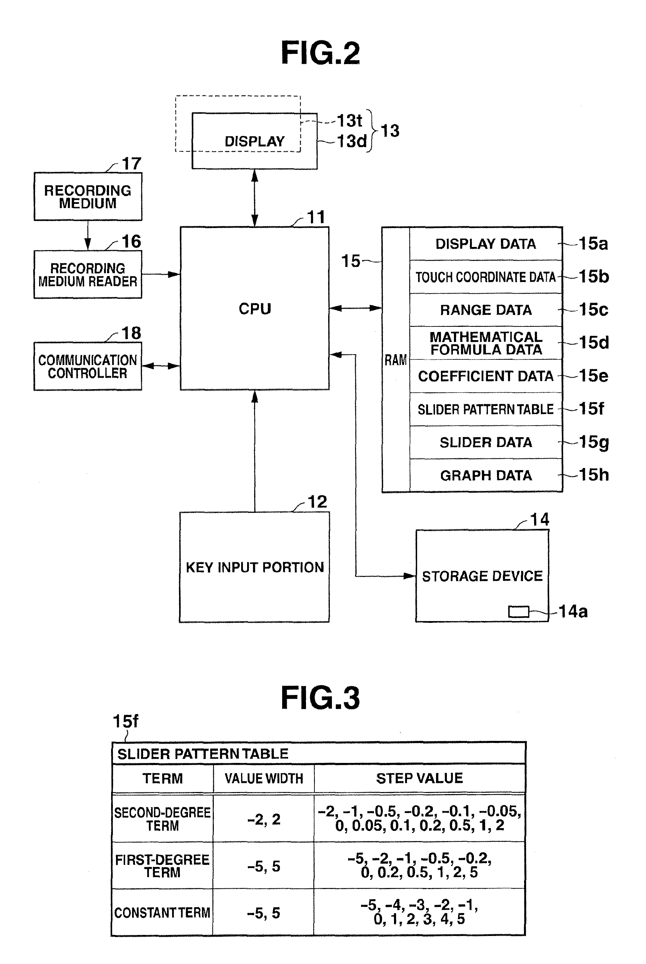

Fig. 2 is a block diagram showing the circuit configuration of the graph scientific electronic calculator 10.

The graph scientific electronic calculator 10 has a CPU 11 which is a microcomputer.

The CPU 11 executes an electronic calculator control program 14a stored in advance in a storage device 14 such as a flash ROM using an RAM 15 as a working memory to thereby perform operation for an electronic calculator function, a function graph display function, etc. Incidentally, the electronic calculator control program 14a may be read into the storage device 14 from an external recording medium 17 such as a memory card through a recording medium reader 16, or may be downloaded into the storage device 14 from a Web server (program server) on a communication network (the Internet) through a communication controller 18.

The key input portion 12, the touch panel display 13, the storage device 14, the RAM 15, the recording medium reader 16 and the communication controller 18 which are shown in Fig. 2 are connected to the CPU 11.

The RAM 15 stores various kinds of data required for processing operation of the CPU 11. A display data storage region 15a, a touch coordinate data storage region 15b, a range data storage region 15c, a mathematical formula data storage region 15d, a coefficient data storage region 15e, a slider pattern table 15f, a slider data storage region 15g, and a graph data storage region 15h are provided in the RAM 15.

Data displayed in colors on the screen of the touch panel display 13 are stored in the display data storage region 15a.

Coordinate data of a touch position corresponding to a user operation detected by the touch panel display 13 are stored in the touch coordinate data storage region 15b.

An X-coordinate range (Xmin to Xmax) and a Y-coordinate range (Ymin to Ymax) which indicate a display range set for a graph screen Gs of the touch panel display 13 are stored in the range data storage region 15c. Incidentally, since the graph scientific electronic calculator 10 has a zoom function of zooming in on (scaling up) or zooming out on (scaling down) a graph displayed on the graph screen Gs and displaying the zoomed-in or zoomed-out graph, the X-coordinate range (ZXmin to ZXmax) and the Y-coordinate range (ZYmin to ZYmax) after the zooming are also stored.

Data about a function formula y = f(x) inputted by an operation on the key input portion 12 are stored in the mathematical formula data storage portion 15d. In the embodiment, a formula of a quadratic function as the function formula is to be processed.

Data about a coefficient of each term included in the function formula y = f(x) stored in the mathematical formula data storage region 15d are stored in the coefficient data storage region 15e.

A reference variable range (value width) and variable pitches (step values) for each of a second-degree term, a first-degree term and a constant term of the quadratic function are registered in advance in the slider pattern table 15f, as data for generating the slider (operation receiver) SL to be displayed together with a graph.

The variable range (value width) and the variable pitches (step values) are shown in Fig. 3. [-2 to 2] and [-2, -1, -0.5, -0.2, -0.1, -0.05, 0, 0.05, 0.1, 0.2, 0.5, 1, 2] are registered respectively as a variable range (value width) and variable pitches (step values) of a coefficient A of a second-degree term of a formula y = AX² + BX + C. Here, values at the opposite ends of the variable range are also included as the step values. In addition, [-5 to 5] and [-5, -2, -1, -0.5, -0.2, 0, 0.2, 0.5, 1, 2, 5] are registered respectively as a variable range (value width) and variable pitches (step values) of a coefficient B of a first-degree term of the formula y = AX² + BX + C. In addition, [-5 to 5] and [-5, -4, -3, -2, -1, 0, 1, 2, 3, 4, 5] are registered respectively as a variable range (value width) and variable pitches (step values) of a constant term C of the formula y = AX² + BX + C. Incidentally, these values are values regarded as appropriate for learning the quadratic formula from the shape of the graph. However, the invention is not limited thereto. Alternatively, these values may fluctuate due to the values of the coordinate ranges or a user may set the values desirably.

Data about the slider SL to be displayed together with the graph are stored in the slider data storage region 15g. The data are determined in accordance with the coefficient of each term included in the function formula y = f(x) and stored in the coefficient data storage region 15e, the X- and Y-coordinate ranges of the graph screen Gs stored in the range data storage region 15c, and the reference variable range (value width) and the variable pitches (step values) of the coefficient of the term registered in the slider pattern table 15f.

Data about a graph generated based on the function formula y = f(x) stored in the mathematical formula data storage region 15d and each value of the coefficient of each term included in the function formula y = f(x) are stored in the graph data storage region 15h.

When the CPU I 1 controls operations of the respective portions of the circuit in accordance with commands of various kinds of processing described in the electronic calculator control program 14a and software and hardware cooperate with each other, the graph scientific electronic calculator 10 configured thus can operate to implement various functions which will be described in the following operation description.

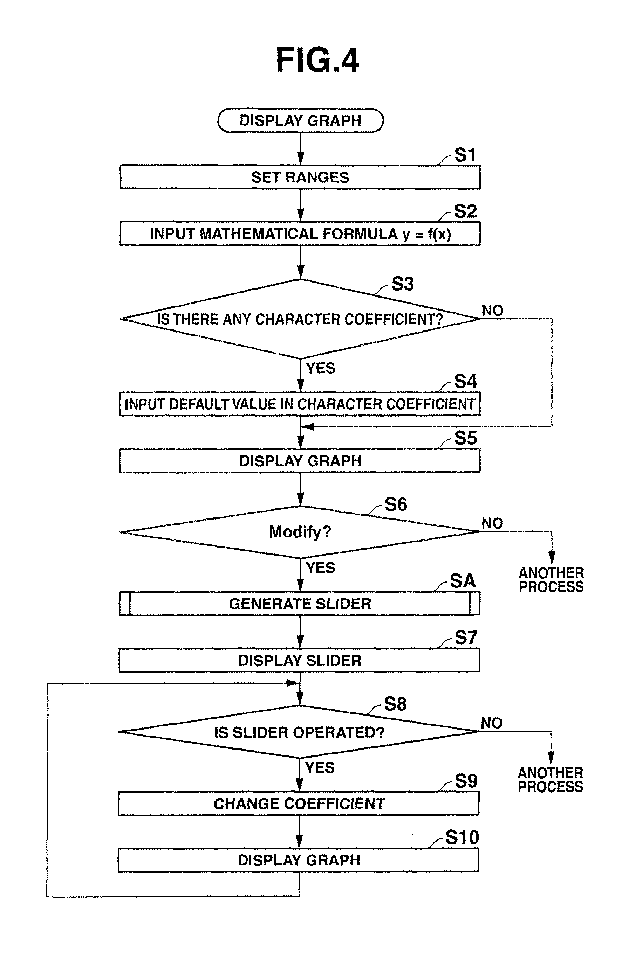

Next, operation of the graph scientific electronic calculator 10 having the aforementioned configuration will be described. Fig. 4 is a flow chart showing a graph display process of the graph scientific electronic calculator 10.

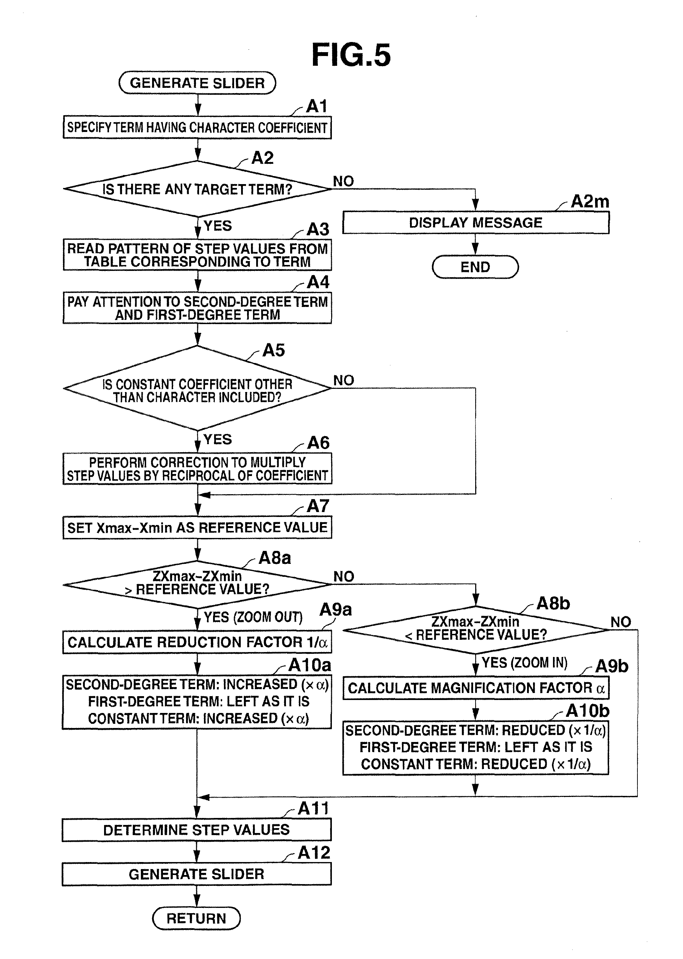

Fig. 5 is a flow chart showing a slider generation process of the graph scientific electronic calculator 10.

When a user operates the [Menu] key 12c to select a graph mode from a menu screen (not shown), the graph display process shown in Fig. 4 is started up. In the graph display process, first, a setting screen (not shown) of coordinate ranges for the graph screen Gs is displayed, an X-axis coordinate range (Xmin to Xmax) and a Y-axis coordinate range (Ymin to Ymax) are inputted by the user, stored in the range data storage region 15c and set as reference coordinate ranges (Step S1). Incidentally, instead of the coordinate ranges inputted by the user, data of coordinate ranges which have been stored already may be used as the reference coordinate ranges directly.

Then, the graph screen Gs of the X-Y coordinates in accordance with the set coordinate ranges and a mathematical formula screen Fs are displayed on the touch panel display 13.

When a desired function formula y = f(x) is inputted by the user in the mathematical formula screen Fs (Step S2), determination is made as to whether there is a coefficient inputted as a character (other than a number) in any term included in the function formula or not (Step S3). That is, determination is made as to whether any coefficient has been set as a variable or not.

When, for example, a function formula "y = (A/2)X² + X - 2" is inputted (Step S2), determination is made as to whether there is a coefficient including a character in each of a second-degree term, a first-degree term and a constant term included in the function formula or not (Step S3).

Here, when conclusion is made that a character A is included in the second-degree term (Yes in Step S3), a default value (for example, "2") is inputted to the coefficient A and "A = 2" is stored in the coefficient data storage region 15e (Step S4).

Then, data for drawing a graph y of the function formula "y = (A/2)X² + X-2" in which the coefficient is set to be "A = 2" are generated in accordance with the set coordinate ranges and stored in the graph data storage region 15h and the graph y is displayed on the X-Y coordinates of the graph screen Gs (Step S5).

Here, when conclusion is made that a character coefficient B is included in the first-degree term of the function formula or when conclusion is made that a character coefficient C is included in the constant term of the function formula (Yes in Step S3), a default value is inputted to the character coefficient B or C and stored in the coefficient data storage region 15e (Step S4). Then, data for drawing a corresponding graph y are generated and displayed on the graph screen Gs (Step S5).

Incidentally, when the coefficient of each term included in the function formula y = f(x) inputted on the mathematical formula screen Fs is inputted as a number (constant) (also including "1" which is omitted on the display) (No in Step S3), the graph y corresponding the function formula y = f(x) is generated in accordance with the coefficient as it is and displayed on the X-Y coordinates of the graph screen Gs (Step S5).

Here, when zoom-in (scaling-up) or zoom-out (scaling-down) is specified by the user operating on one of icons arrayed and displayed in an upper portion of the touch panel display 13, the current reference coordinate ranges (Xmin to Xmax) and (Y min to Ymax) set for the graph screen Gs are changed in accordance with a magnification factor (α) or a reduction factor (1/α) of the zoom-in or zoom-out so that the zoomed coordinate ranges (ZXmin to ZXmax) and (ZYmin to ZYmax) can be reset. In accordance with this resetting, the graph y is displayed in a scaled-up or scaled-down manner. In the case of the zoom-in (scaling-up), the interval of the scale of each coordinate in the graph screen Gs is widened. In the case of the zoom-out (scaling-down), the interval of the same is narrowed. The zoomed coordinate ranges (ZXmin to ZXmax) and (ZYmin to ZYmax) in the state in which the zoom function is active are also stored in the range data storage region 15c.

In the state in which the graph y has been displayed on the graph screen Gs, the user may operate the [Mdfy] key 12e to display the graph y in which any coefficient included in the function formula is varied.

When the [Mdfy] key 12e is operated (Yes in Step S6), the flow of processing is shifted to a slider generation process (Step SA).

The slider generation process will be described with reference to the flow chart of Fig. 5.

First, any term having a character coefficient is specified from the function formula "y = (A/2)X² + X - 2" (Step A1). Here, conclusion is made that there is a second-degree term "(A/2)X²" having a coefficient "A" (Yes in Step A2).

Then, variable pitches (step values) [-2, -1, -0.5, -0.2, -0.1, -0.05, 0, 0.05, 0.1, 0.2, 0.5, 1, 2] for a slider SLA corresponding to the second-degree term specified as the term having the character coefficient "A" are read from the slider pattern table 15f (see Fig. 3) (Step A3).

Attention is paid to the second-degree term "(A/2)X²" and the first-degree term "X" included in the function formula "y = (A/2)X² + X - 2" (Step A4). Next, determination is made as to whether a constant (number) coefficient other than the character is included or not in the specified term having the character coefficient (Step A5).

Here, conclusion is made that a constant coefficient "1/2" other than the character "A" is included in the specified second-degree term "(A/2)X²" having the character coefficient "A" (Yes in Step A5). Then, the variable pitches (step values) for the slider SLA read from the slider pattern table 15f are multiplied by "2" which is the reciprocal of the coefficient "1/2" so that the variable pitches (step values) are corrected to [-4, -2, -1, -0.4, -0.2, -0.1, 0, 0.1, 0.2, 0.4, 1, 2, 4] (Step A6).

When the formula of the quadratic function is graphed, the size of the value of the coefficient of the second-degree term affects the degree of an opening of the graph. That is, when the value is large, the opening is narrow. When the value is small, the opening is wide. The reason why the correction is performed by multiplication by the reciprocal of the constant coefficient is to restore the change of the opening of the graph to its original change to thereby make it easy to understand the change of the shape of the graph, otherwise the originally planned change of the opening of the graph would be different due to the constant.

Incidentally, when conclusion is made in the steps A1 and A2 that there is a first-degree term "BX" having a character coefficient "B", variable pitches (steps values) [-5, -2, -1, -0.5, -0.2, 0, 0.2, 0.5, 1, 2, 5] for a slider SLB corresponding to the first-degree term are read from the slider pattern table 15f (see Fig. 3) (Step A3). Similarly, when conclusion is made that there is a constant term having a character "C", variable pitches (step values) [-5, -4, -3, -2, -1, 0, 1, 2, 3, 4, 5] for a slider SLC corresponding to the constant term are read from the slider pattern table 15f (see Fig. 3) (Step A3).

When conclusion is made in Steps A4 and A5 that a constant (number) coefficient other than the character "B" is included in the first-degree term "BX" (Yes in Step A5), the variable pitches (step values) read from the slider pattern table 15f are corrected to be multiplied by the reciprocal of the constant coefficient (Step A6).

Incidentally, when conclusion is made in the Steps A1 and A2 that no term having a character coefficient is included in the inputted function formula "y = f(x)" (No in Step A2), a message indicating that there is no target term whose coefficient can be varied, for example, "there is no coefficient to be varied" is displayed (Step A2m).

Then, a value Xmax-Xmin is calculated from the values of the reference coordinate range of the X-axis stored in the range data storage region 15c in the Step S1 so that the value Xmax-Xmin is set as a reference value (Step A7). When the current graph screen Gs is zoomed and data for the zoomed coordinate ranges (ZXmin to ZXmax) and (ZYmin to ZYmax) are stored, a value ZXmax-ZXmin is calculated and determination is made as to whether the value ZXmax-ZXmin is larger or smaller than the reference value (Step A8a or A8b).

Here, when conclusion is made that the value ZXmax-ZXmin is larger than the reference value and the graph screen Gs is in a zoom-out state (scaled down) (Yes in Step A8a), the reduction factor (1/α) of the zoom-out is calculated (Step A9a).

The data of the variable pitches (step values) for the slider SL in the second-degree term are corrected to be multiplied by the reciprocal (α) of the reduction factor (1/α) so that the width of each of the step values can be increased (Step A10a).

Here, the variable pitches (step values) [-4, -2, -1, -0.4, -0.2, -0.1, 0, 0.1, 0.2, 0.4, 1, 2, 4] for the slider SLA in the second-degree term, which pitches (step values) have been corrected in the Steps A5 and A6 are multiplied by the reciprocal (α) of the reduction factor (1/α). For example, when the reduction factor (1/α) of the graph y displayed on the graph screen Gs is "1/3", the variable pitches (step values) are multiplied by the reciprocal "3" of the reduction factor "1/3" so as to be corrected to [-12, -6, -3, -1.2, -0.6, -0.3, 0, 0.3, 0.6, 1.2, 3, 6, 12].

The reason why the correction is performed in accordance with the zoom-out is as follows. That is, when the graph screen Gs is zoomed out (scaled down) to make the display range of the graph y wide, the interval of the scale of each coordinate becomes narrow and the change of the graph y for each variable pitch (step value) based on the slider SLA becomes small. Therefore, the correction is performed in such a manner that the variable pitches (step values) are multiplied by the reciprocal (α) of the reduction factor (1/α) of the zoom-out so that the variable pitches can be increased. With this correction, the change of the shape of the graph in accordance with the coefficient of the second-degree term varied by the slider SLA can be understood easily.

In addition, when the character "C" is included in the constant term of the graphed function formula "y = f(x)", the variable pitches (step values) [-5, -4, -3, -2, -1, 0, 1, 2, 3, 4, 5] for the slider SLC are corrected to be multiplied by the reciprocal (α) of the reduction factor (1/α) for the similar reason to the slider SLA (Step A10a).

Incidentally, even when the coefficient "B" as a character is included in the first-degree term of the graphed function formula "y = f(x)", the variable pitches (step values) for the slider SLB are not corrected but left as they are because the zoom-out (scaling-down) of the graph screen Gs has a small influence on the degree with which the graph y changes in accordance with the variation of the coefficient of the first-degree term.

On the other hand, when conclusion is made that the value ZXmax-ZXmin is smaller than the reference value and the graph screen Gs is in a zoom-in state (scaled up) (Yes in Step A8b), a magnification factor (α) of the zoom-in is calculated (Step A9b).

The data for the slider SLA in the second-degree term are corrected to be multiplied by the reciprocal (1/α) of the magnification factor (α) so that the width of each of the step values can be reduced (Step A10b).

Here, the variable pitches (step values) [-4, -2, -1, -0.4, -0.2, -0.1, 0, 0.1, 0.2, 0.4, 1, 2, 4] for the slider SLA in the second-degree term, which pitches (step values) have been corrected in the Steps A5 and A6, are multiplied by the reciprocal (1/α) of the magnification factor (α). For example, when the magnification factor (α) of the graph y displayed on the graph screen Gs is "2", the variable pitches (step values) are multiplied by the reciprocal "1/2" of the magnification factor "2" so as to be corrected to [-2, -1, -0.5, -0.2, -0.1, -0.05, 0, 0.05, 0.1, 0.2, 0.5, 1, 2].

The reason why the correction is performed in accordance with the zoom-in is as follows. That is, when the graph screen Gs is zoomed in (scaled up) to make the display range of the graph y narrow, the interval of the scale of each coordinate becomes wide and the change of the graph y for each variable pitch (step value) based on the slider SLA becomes large. Therefore, the correction is performed in such a manner that the variable pitches (step values) are multiplied by the reciprocal (1/α) of the magnification factor (α) of the zoom-in (scaling-up) so that the variable pitches can be reduced. With this correction, the change of the shape of the graph in accordance with the coefficient of the second-degree term varied by the slider SLA can be understood easily.

In addition, when the character "C" is included in the constant term of the graphed function formula "y=f(x)", the variable pitches (step values) [-5, -4, -3, -2, -1, 0, 1, 2, 3, 4, 5] for the slider SLC are corrected to be multiplied by the reciprocal (1/α) of the magnification factor (α) for the similar reason to the slider SLA of the second-degree term (Step A10b).

Incidentally, even when the coefficient "B" as a character is included in the first-degree term, the variable pitches (step values) for the slider SLB are not corrected but left as they are.

Thus, variable pitches (step values) for a slider SL for varying the value of the character coefficient are determined for each term included in the function formula y=f(x), and stored in the slider data storage region 15g (Step A11). The slider SL having the determined variable pitches (step values) is generated (Step A12) and displayed on the display 13 (Step S7).

For example, when the function formula "y = (A/2)X² + X - 2" is inputted and the graph screen Gs is displayed in a zoom-out state (in a scaled-down manner) with a factor (1/3), variable pitches (step values) [-12, -6, -3, -1.2, -0.6, -0.3, 0, 0.3, 0.6, 1.2, 3, 6, 12] for the slider SLA in the second-degree term are determined as a result of the Steps A1 to A8a, A9a, and A10a so that the slider SLA having a variable range (value width) [-12 to 12] as shown in Fig. 1 is displayed above the graph screen Gs (Step S7).

When the knob portion CS of the slider SLA is slid while touched (Step S8), the value of the coefficient "A" is changed to a value where the knob portion CS is located (Step S9) so that data for drawing a graph y of "y = (A/2)X² + X - 2" using the value of the coefficient "A" are regenerated and displayed on the graph screen Gs again (Step S 10).

Incidentally, when the slider SLB for varying the character coefficient "B" of the first-degree term included in the function formula y = f(x) is generated in the slider generation process (Step SA), and further, when the slider SLC for varying the character "C" of the constant term is generated, the knob portion CS of each of the sliders SLB and SLC is slid while touched (Step S8) so that the value of the character "B" or "C" can be changed (Step S9) and the graph y can be displayed again (Step S10).

Thus, according to the slider generation process involved in the graph display process of the graph scientific electronic calculator 10, the value of each coefficient included in the graphed function formula can be varied as a proper pitch in a proper range so that the change of the graph can be understood by the user easily.

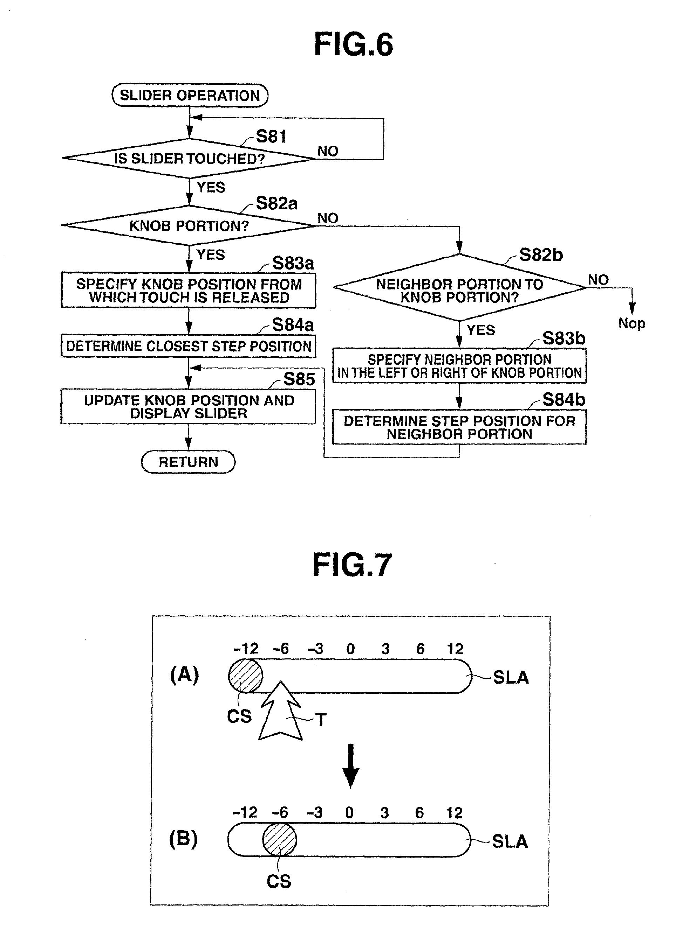

Fig. 6 is a flow chart showing a slider operation process of the graph scientific electronic calculator 10.

When a touch operation on the slider SLA displayed on the touch panel display 13 is detected (Yes in Step S81), determination is made as to whether the knob portion CS of the slider SLA is directly touched or not (Step S82a).

Here, when conclusion is made that the knob portion CS is touched (Yes in Step S82a), a position of the knob portion CS from which the touch is released after the knob portion CS is slid is specified (Step S83a). A step position of a coefficient value closest to the specified position is determined (Step S84a).

On the other hand, when conclusion is made that the knob portion CS is not directly touched but a neighbor portion to the knob portion CS is touched (Yes in Step S82b), the touch position is specified to be on the left side or the right side of the knob portion CS (Step S83b). When the touch position is specified to be the neighbor portion on the left side of the knob portion CS, a step position having a next smaller value to the knob portion CS is determined. On the other hand, when the touch position is specified to be the neighbor portion on the right side of the knob portion CS, a step position having a next larger value to the knob portion CS is determined (Step S84b).

When the step position corresponding to the user operation is determined thus, the knob portion CS is moved to the step position so that the slider SLA updated thus is displayed (Step S85).

Fig. 7 is a view showing a motion of the graph scientific electronic calculator 10 in response to a slider operation.

When a neighbor portion on the right side of the knob portion CS in the slider SLA displayed on the touch panel display 13 is touched as specified by an arrow T in the state in which the knob portion CS is located in a position of a coefficient value "-12", as shown in Fig. 7(A) (Steps S81, S82b and S83b), a step position of a coefficient value "-6" in the neighbor portion on the right side of the knob portion CS is determined (Step S84).

Then, the knob portion CS is moved to the determined step position of the coefficient value "-6" so that the slider SLA updated thus is displayed, as shown in Fig. 7(B) (Step S85).

Figs. 8(A) to 8(H) are views showing the change of the display of a graph y in response to a slider operation in the graph display process of the graph scientific electronic calculator 10.

Specific examples shown in Figs. 8(A) to 8(H) show the change of the display of the graph y in the case where the graph y of the function formula "y = (A/2)X² + X-2" is displayed on the graph screen Gs (with a reduction factor of 1/3) and the value of the coefficient "A" is varied successively by the slider SLA.

That is, as described in the slider generation process (see Fig. 5), the reference variable pitches (step values) for the slider SLA in the second-degree term of the function formula "y = (A/2)X² + X - 2" are read as [-2, -1, -0.5, -0.2, -0.1, -0.05, 0, 0.05, 0.1, 0.2, 0.5, 1, 2] from the slider pattern table 15f (see Fig. 3) (Steps A1 to A3).

The read step values are corrected by the reciprocal "2" of the constant coefficient "1/2" (Steps A4 to A6) and further corrected by the reciprocal "3" of the reduction factor "1/3" of the graph screen Gs (Steps A7 and A8a to A10a), so that the step values are changed to [-12, -6, -3, -1.2, -0.6, -0.3, 0, 0.3, 0.6, 1.2, 3, 6, 12] (Step S11). Then, the slider SLA corresponding to the determined variable pitches (step values) is displayed as shown in Figs. 8(A )to 8(H).

As shown in Figs. 8(A) to 8(H), when the slider SLA is operated to slide while touched by the user, the value of the coefficient "A" is varied successively (Steps S8 and S9) so that data for drawing the graph y are regenerated and displayed again on the graph screen Gs whenever the value of the coefficient "A" is varied (Step S10).

Incidentally, the respective operation methods performed by the graph scientific electronic calculator 10 as described in the embodiments, that is, the methods of the graph display process shown in the flow chart of Fig. 4, the slider generation process shown in the flow chart of Fig. 5, the slider operation process shown in the flow chart of Fig. 6, etc. can be recorded as a computer-executable program onto a recording medium (recording medium 17) such as a memory card (an ROM card, an RAM card, or the like), a magnetic disk (a flexible disk, a hard disk, or the like), an optical disk (a CD-ROM, a DVD, or the like) or a semiconductor memory and distributed. The computer (CPU 11) of the electronic calculator (10) having the graph display function can read the program recorded on the recording medium to execute the same processes based on the aforementioned methods.

In addition, data of the program for implementing the methods can be transmitted as a form of program codes through a communication network (public line). The computer (CPU 11) of the electronic calculator 10 having the graph display function can receive the program through a communication device (the communication controller 18) connected to the communication network to execute the same processes based on the aforementioned methods.

Incidentally, the embodiment of the graph display has been described as a device performing all operations for the graph display process in a special appliance which is the graph scientific electronic calculator 10. However, the graph display may be formed as a server device of a cloud system.

That is, in this case, when a desired function formula "y = f(x)" is inputted to the server device by a user from a terminal device such as a tablet terminal having a user interface, the server device generates graph data corresponding to the function formula and outputs the data for displaying the graph to the terminal device so that the data can be displayed on the terminal device. When an instruction [Modify] issued in accordance with a user operation is inputted from the terminal device, the service device generates a slider SL and outputs the slider SL to the terminal device in the same manner as in the embodiment so that the slider SL can be displayed on the terminal device. When a value of a coefficient in accordance with a user operation on the slider SL is inputted from the terminal device, the server device regenerates the graph data in which the value of the coefficient has been changed and outputs the data for displaying the graph to the terminal device so that the data can be displayed on the terminal device.

In this manner, it is matter of course that even a terminal device having no special function can display a graph y corresponding to a function formula inputted by a user as long as the terminal device can gain access to the server device. In addition, a value of a coefficient included in the function formula can be varied as a suitable pitch in a suitable range by the slider SL so that the change of the graph y can be understood easily by the user.

While the present invention has been shown and described with reference to certain exemplary embodiments thereof, it will be understood by those skilled in the art that various changes in form and details may be made therein without departing from the spirit and scope of the invention as defined by the appended claims. It is aimed, therefore, to cover in the appended claim all such changes and modifications as fall within the true spirit and scope of the present invention.

## Claims

1. An electronic apparatus comprising:
a display device; and
a processor configured to:
display a graph corresponding to a function formula on the display device, wherein a coefficient of a term included in the function formula comprises a variable;
determine a numeric value range of numeric values which are to be inputted to the variable, based on a degree of the term and a display state of the graph;
generate an operation receiver for allowing a user to variably specify a numeric value within the determined numeric value range;
display the operation receiver on the display device,
wherein when a numeric value is specified within the numeric value range through the operation receiver, the processor displays a graph corresponding to a function formula in which the specified numeric value is inputted to the variable on the display device.

2. The electronic apparatus according to claim **1,** further comprising:
a variable pattern storage unit configured to store a reference numeric value range and a plurality of reference step values for each of different degree terms included in the function formula, wherein the plurality of reference step values are specified by the user within the reference numeric value range,
wherein the processor is configured to read the reference numeric value range and the reference step values from the variable pattern storage unit in accordance with the degree of the respective terms and generate the operation receiver based on the read reference numeric value range and the read reference step values.

3. The electronic apparatus according to claim 2, wherein
the processor is configured to correct the reference numeric value range and the reference step values in accordance with a display range of the graph and generate the operation receiver based on the corrected reference numeric value range and the corrected reference step values.

4. The electronic apparatus according to claim 3, wherein
when the display range of the graph is set in a zoom-out state, the processor corrects the reference step values so as to increase the respective reference step values and generates the operation receiver based on the corrected reference step values, and
when the display range of the graph is set in a zoom-in state, the processor corrects the reference step values so as to reduce the respective reference step values and generates the operation receiver based on the corrected reference step values.

5. The electronic apparatus according to claim 2, wherein
the processor is further configured to determine whether or not the coefficient further comprises a constant, and
wherein when the processor determines that the coefficient further comprises the constant, the processor corrects the reference numeric value range and the reference step values by multiplying the reference numerical value range and the reference step values by a reciprocal of the constant and generates the operation receiver based on the corrected reference numeric value range and the corrected reference step values.

6. A graph display method comprising:
(a) displaying a graph corresponding to a function formula on a display device, wherein a coefficient of a term included in the function formula comprises a variable;
(b) determining a numeric value range of numeric values which are to be inputted to the variable, based on a degree of the term and a display state of the graph;
(c) generating an operation receiver for allowing a user to variably specify a numeric value within the determined numeric value range;
(d) displaying the operation receiver on the display device, and
(e) when a numeric value is specified within the numeric value range through the operation receiver, displaying a graph corresponding to a function formula in which the specified numeric value is inputted to the variable on the display device.

7. The method according to claim **6,** further comprising:
(f) storing a reference numeric value range and a plurality of reference step values for each of different degree terms included in the function formula, wherein the plurality of reference step values are specified by the user within the reference numeric value range,
wherein step (c) comprises:
(c-1) reading the reference numeric value range and the reference step values in accordance with the degree of the respective terms and generate the operation receiver based on the read reference numeric value range and the read reference step values.

8. The method according to claim 7, wherein
step (c) further comprises:
(c-2) correcting the reference numeric value range and the reference step values in accordance with a display range of the graph and generate the operation receiver based on the corrected reference numeric value range and the corrected reference step values.

9. The method according to claim 8, wherein
step (c) further comprises:
(c-3) when the display range of the graph is set in a zoom-out state, correcting the reference step values so as to increase the respective reference step values and generating the operation receiver based on the corrected reference step values, and
(c-4) when the display range of the graph is set in a zoom-in state, correcting the reference step values so as to reduce the respective reference step values and generating the operation receiver based on the corrected reference step values.

10. The method according to claim 7, further comprising:
(g) determining whether or not the coefficient further comprises a constant, and
wherein step (c) further comprises:
(c-5) when determining that the coefficient further comprises the constant, correcting the reference numeric value range and the reference step values by multiplying the reference numerical value range and the reference step values by a reciprocal of the constant, and generating the operation receiver based on the corrected reference numeric value range and the corrected reference step values.
